# EUROPEAN PATENT APPLICATION

(11) **EP 1 655 407 A1**
(43) Date of publication of application: **10.05.2006**
(21) Application number: 05291296.1
(22) Date of filing: 16.06.2005
(51) Int. Cl.: D06F 39/00, D06F 39/06

(54) **Washing machine, apparatus and method of controlling the same**

(30) Priority: 04.11.2004 KR 2004089442
(71) Applicant: LG ELECTRONICS INC., Seoul (KR)
(72) Inventor: Hong, Kyung Seop, Yunsoo-gu Incheon-si (KR); Jeong, In Chul, Yangcheon-gu Seoul (KR); Hong, Sog Kie, Yangcheon-gu Seoul (KR)
(74) Representative: Pichat, Thierry

(57) **Abstract**

A washing machine is provided. The washing machine includes a driver, an electrode sensor, and a controller. The driver operates each part of the washing machine. The electrode sensor detects bubble generation using a voltage change between the electrodes when the bubbles contact the electrodes during the washing cycle. The controller controls the driver using a bubble detection signal from the electrode sensor to allow a bubble-removal cycle to be performed. Therefore, when the bubbles are excessively generated during the operation of the washing machine, the bubble generation can be swiftly detected and the relevant operation is performed thereto.

## Description

### BACKGROUND OF THE INVENTION

### Field of the Invention

The present invention relates to a washing machine, and more particularly, to an apparatus and a method of controlling a washing machine capable of enhancing a washing cycle by detecting bubbles when the bubbles are excessively generated during the washing cycle and performing a cycle thereto.

### Description of the Related Art

Washing machines can be classified into three kinds according to the method of performing the washing cycle. In detail, the washing machines are classified into a pulsator type washing machine, an agitator type washing machine, and a drum washing machine. In the pulsator type washing machine, a pulsator is mounted in the lower side of a drum standing upright, a rotational water current is generated by rotation of the pulsator, and the laundry is washed by being rubbed against the water current. In the agitator type washing machine, an agitator extending upright to the upper side from the lower side of a drum rotates in order to generate a rotational water current. In the drum washing machine, a drum horizontally lying rotates and the washing cycle is performed by collision of the falling laundry with water.

Particularly, since the drum washing machine consumes a small amount of water, the drum washing machine is widely used recently. The drum washing machine consumes a small amount of water, however, a large amount of bubbles is generated during the washing cycle and leaked to the outside of the washing machine. To suppress the large amount of bubbles generated during the washing cycle, detergent only for the drum washing machine is used but deterioration of washing efficiency due to the bubbles generated during the washing cycle of the drum washing machine, a contamination problem due to leakage of the bubbles, and a short-circuit problem of the washing machine still remain unsolved.

To solve the problem due to the bubbles generated by the drum washing machine, a conventional method of measuring a pressure due to a large amount of bubbles generated during the washing cycle, suspending the washing cycle when the measured pressure exceeds a predetermined level, and resuming the washing cycle after the bubbles subside more or less, has been suggested.

However, since the above method can remove the bubble generation only when a predetermined pressure is produced in the inside of the drum, a point when the bubble generation is detected may be delayed compared with a point when the bubbles are actually generated. Accordingly, since the washing cycle is performed for a long time with the bubble generated, washing efficiency is deteriorated.

Also, in the case where the inside of the washing machine is sealed, air pressure is raised due to the bubbles and the pressure can be detected but in case of an open type washing machine, the bubble generation cannot be fundamentally detected.

Also, in case of a washing machine having a dry function, when the bubbles are excessively generated during the washing cycle, the bubbles penetrate into a heater duct for dry and a heater in the heater duct is immersed in the bubbles. Therefore, when the washing machine is used for a long time, the fluff is pushed up together with the bubbles and caught in the heater and becomes a cause of catching fire during the dry cycle. Also, corrosion might occur and the reliability of the product is deteriorated.

### SUMMARY OF THE INVENTION

Accordingly, the present invention is directed to a washing machine, an apparatus and a method of controlling the same that substantially obviate one or more problems due to limitations and disadvantages of the related art.

An object of the present invention is to provide a washing machine, an apparatus and a method of controlling the same capable of enhancing washing efficiency by detecting bubbles upon generation of the bubbles and immediately performing a bubble-removal cycle.

Another object of the present invention is to provide a washing machine, an apparatus and a method of controlling the same capable of enhancing convenience in applying the product by having bubble generation detected in the inside of a drum regardless of whether the washing machine being a closed type or an open type.

A further another object of the present invention is to provide a washing machine, an apparatus and a method of controlling the same capable of improving the operation reliability of a bubble detection device by having bubble generation detected by an electronic-sensitive method.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a washing machine including: an outcase; a tub disposed within the outcase, for storing washing water; a drum for rotating in the tub and receiving a laundry; and an electrode sensor having at least one part disposed in an inner side of the tub, for detecting a voltage change when a bubble contacts the sensor.

In another aspect of the present invention, there is provided a washing machine including: an outcase; a tub disposed within the outcase, for storing washing water; a drum for rotating in the tub and receiving a laundry; and a pipe for communication of an inside with an outside of the tub; an electrode sensor having at least one part disposed in an inner side of the tub, for changing a detected voltage when a bubble contacts the sensor; and a controller for controlling to perform a bubble-removal cycle when a voltage of the electrode sensor changes to a predetermined level.

In a further another aspect of the present invention, there is provided an apparatus of controlling a washing machine, including: a driver for driving each part of the washing machine; an electrode sensor for detecting a bubble generation using a voltage change between electrodes when a bubble generated during a washing cycle contacts the electrodes; and a controller for controlling to perform a bubble-removal cycle of the washing machine by controlling the driver using a bubble detection signal from the electrode sensor.

In a still further another aspect of the present invention, there is provided a method of controlling a washing machine, including: when conductive bubble generated during the washing cycle contacts an electrode sensor, judging that a bubble has been generated using a voltage change detected by the electrode sensor and performing a bubble-removal cycle.

According to the present invention, since when the bubble is generated during the washing cycle of the washing machine, the bubble generation can be exactly detected and the bubble-removal cycle can be performed, washing efficiency can be enhanced. Also, the operation reliability of the washing machine improves and the apparatus of controlling the washing machine can be conveniently applied to the washing machine regardless of its type.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a sectional view of a washing machine of the present invention;

Fig. 2 is a perspective view of a backside of a tub in a washing machine of the present invention;

Fig. 3 is a sectional view taken along a line I-I' of Fig. 2;

Fig. 4 is a control block diagram associated with an electrode sensor;

Fig. 5 is a view of a voltage change detected by an electrode sensor;

Fig. 6 is a flowchart of a method of removing a bubble in a washing machine according to the present invention;

Fig. 7 is a view of the second embodiment according to the present invention; and

Fig. 8 is a view of the third embodiment according to the present invention.

### DETAILED DESCRIPTION OF THE INVENTION

Reference will now be made in detail to the preferred embodiments of the present invention, examples of which are illustrated in the accompanying drawings.

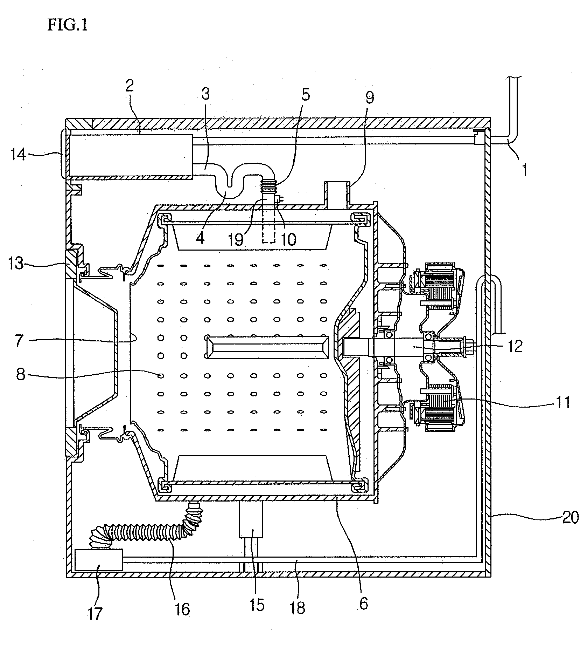

Fig. 1 is a sectional view of a washing machine of the present invention.

Referring to Fig. 1, the drum washing machine includes: an outcase 20; a tub 6 received in the outcase 20; a drum 7 rotating inside the tub 6; a motor 11 disposed at a rear side of the drum 7; and a driving shaft 12 connected with the motor 11 and the drum 7, for providing a driving force.

Also, the drum washing machine further includes: a water hose 1 through which washing water is supplied from the outside; a detergent insertion member 2 to which the water from the water hose 1 is supplied and detergent received therein is molten and properly supplied; and an insertion pipe 3 connected between the detergent insertion member 2 and the tub 6, for supplying water mixed with the detergent to the tub 6. The insertion pipe 3 includes: a 'U'-shaped pipe 4 bent vertically so that air or water may not flow backward from the tub 6; a bellows 5 for preventing vibration of the tub 6 from propagating to the outcase 20; and a water pipe 19 disposed in a connection portion between the bellows 5 and the tub 6.

Also, the water pipe 19 has an electrode sensor 10 therein so that when a bubble rises along the water pipe 19, the electrode sensor 10 is conducted by conductivity of the bubble itself and thus bubble generation can be detected. When the bubble generation is detected by the electrode sensor 10, a detection signal is transferred to a controller of the washing machine, so that the bubble-removal cycle is performed in a predetermined process.

Also, after the washing cycle, the rinsing cycle, and the spinning cycle are finished, the washing water in the tub 6 is drained to the drain unit. The drain unit includes: a drain pipe 16 for guiding the water of the tub 6; a drain pump 17 for forcibly discharging the water from the drain pipe 16; and a drain hose 18 for allowing the water to be connected with the outside of the washing machine.

Also, the tub 6 has a communication pipe 9 formed in an upper side thereof and through which the inner space of the tub 6 communicates with the outside of the tub 6 to allow outside air may flow in freely, and to prevent a child from being choked when the child might enter the inside of the tub 6. Also, a door 13 is formed on a front side of the tub 6 to open and close the inside of the tub 6 and receive the laundry. A manipulation unit 13 with which a user performs a manipulation is formed on an upper side of the door 13. A damper 15 supports the weight of the tub 6 and attenuates vibration produced during rotation of the drum 7. The drum 7 has a plurality of holes 8 formed in an outer periphery thereof to allow the washing water to flow in and out to and from the inside of the drum 7.

In operation, the washing water is supplied through the water hose 1 and the insertion pipe 3 first. During the water supply, the water can selectively pass through the detergent insertion member 2 so that the water can be mixed with the detergent. After the detergent and the water are supplied to the tub 6, the drum 7 is rotated by the motor 11, so that the washing cycle is performed. The laundry received in the drum 7 is washed by frictional force produced when the laundry collides with the washing water while the laundry falls down in the drum. After the washing cycle is finished, the water in the tub 6 is forcibly sucked by the dram pump 17 and drained to the outside.

In the meantime, during the washing cycle, bubbles can be generated due to the collision between the laundry and the washing water. The bubbles are constantly produced within the tub 6 and rise along the inner space of the tub 6. When the bubbles rise, they hinder the falling operation of the laundry, so that washing efficiency may deteriorate. Also, the bubbles have the electrode sensor 10 formed in the water pipe 19 conduct to each other. When excessive generation of the bubbles is detected by the conduction of the electrode sensor 10, the bubble-removal cycle for reducing the bubble is performed by suspending the washing cycle or supplying the washing water additionally.

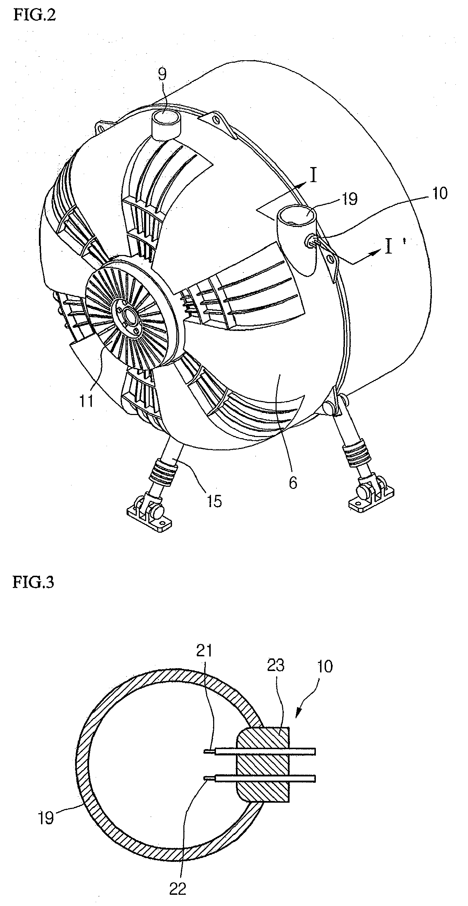

Fig. 2 is a perspective view of a backside of a tub in a washing machine of the present invention.

Referring to Fig. 2, the weight of the tub 6 can be supported by a plurality of damper 15 and the motor 11 is installed at the back of the tub 6 so that rotational force can be transferred to the side of the drum 7. Since the motor 11 is directly connected with the back of the tub 6, vibration noise and friction loss are also reduced.

Also, the communication pipe 9 is formed on the upper end of the tub 6 so that outside air can flow into the tub 6 and inside air can be discharged to the outside. Therefore, the communication pipe 9 can prevent a child from being choked to death when the child enters the inside of the tub 6. Also, the water pipe 19 is formed at a position lower than the communication pipe 9 in the outer periphery of the tub 6. The water mixed with the detergent and pure water is supplied through the water pipe 19.

In the meantime, the electrode sensor 10 is formed in the inside of the water pipe 19 as one characteristic of the present invention. The bubble generation can be detected by the electrode sensor 10. Forming the electrode sensor 10 in the inside of the water pipe 19 is intended for preventing collision with the laundry to stably mount the electrode sensor 10 and more swiftly detecting the bubble generation to allow the washing machine to start the bubble-removal cycle swiftly. If the electrode sensor 10 is formed at an arbitrary position on the inner surface of tub 6, the installation position of the electrode sensor 10 cannot be maintained stably due to collision with the washing water. Also, if the electrode sensor 10 is formed in the inside of the communication pipe 9, the bubble-removal cycle cannot be properly performed. That is, since the communication pipe 9 is formed at the uppermost end of the tub 6, when the bubble is detected by the electrode sensor 10, an entire inner space of the tub 6 is already filled with the bubble and the washing efficiency falls down as much as that and thus it is too late to start the bubble-removal cycle.

However, if the communication pipe 9 is formed at a lower position of an entire height of the tub 6, the electrode sensor 10 may be formed in the inside of the communication pipe 9. At this point, the communication pipe 9 should be formed at a height such that the water in the tub 6 does not flow backward through the communication pipe 9.

Resultantly, the electrode sensor 10 can be formed at a pipe formed as a predetermined pipe shape and communicating with the tub 6, and formed at a height such that the washing water is not leaked during the washing cycle. The pipe for performing such a function can include the communication pipe 9 and the water pipe 19 provided to a general washing machine. The electrode sensor 10 can be also formed in a condensing duct in the case of a condensing type washing machine having a dry function and formed in an exhaust port in the case of an exhaust-type washing machine having a dry function depending on the types of the washing machine.

Fig. 3 is a sectional view taken along a line I-I' of Fig. 2. Referring to Fig. 3, the electrode sensor 10 is formed in the inside of the water pipe 19. The electrode sensor 10 includes: the first electrode 21 and the second electrode 22 projected into the inside of the water pipe 19 and contacting the inner environment of the water pipe 19; and an insulator 23 fit in the water pipe 10, for allowing the position of the electrode sensor 10 to fixed therein and the electrodes 21 and 22 to be insulated to each other. The insulator further performs as a sealer for preventing the water or the bubble flowing in the water pipe 19 from leaking out to the outside. Of course, other type sealing member for performing the sealing function may be further formed.

Particularly, the electrodes 21 and 22 are horizontally formed at the same height, so that the bubbles may contact the first and second electrodes 21 and 22 simultaneously when the bubbles rise along the water pipe 19. When the heights at which the electrodes 21 and 22 are installed are different, the bubbles can be detected only if the other electrode contacts the bubbles after one electrode contacts the bubbles, so that a time the bubbles are detected is delayed as much as that.

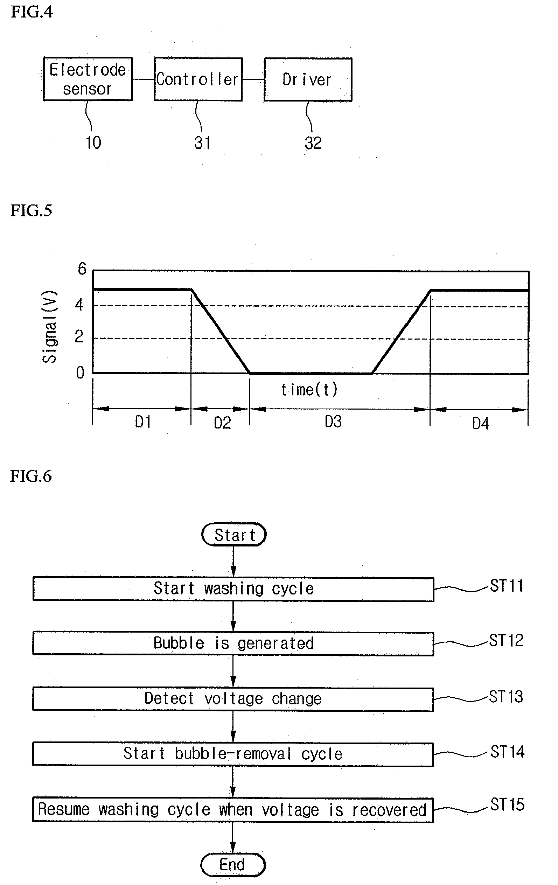

Fig. 4 is a control block diagram associated with an electrode sensor and Fig. 5 is a view of a voltage change detected by an electrode sensor. Referring to Figs. 4 and 5, when the bubbles contact the electrode sensor 10, electricity flows between a pair of electrodes 21 and 22 by ion from the detergent contained in the bubbles and conductive ion of the washing water itself.

The electrode sensor 10 is conducted, a detection signal is transferred to the controller 31 of the washing machine. The controller 31 controls the driver 32 of the washing machine to allow the bubble-removal cycle to be performed. During the bubble-removal cycle, a water supply unit including the water hose is controlled to supply cool water or the drivr including the motor is controlled to suspense rotation of the drum 7.

A voltage change of the electrode sensor 10 detected while the bubbles contact the electrode sensor 10 will be descried in detail with reference to Fig. 5. First, when the bubbles are not generated and the washing machine normally operates, a voltage of about 5 volt is formed between two ends of the electrode sensor (refer to a region D1). However, since a current flows between the electrodes 21 and 22 through the bubbles from the point when the bubbles fill the inside of the tub 6, rise along the water pipe 19, and contact the electrode sensor 10, the voltage gradually drops down (refer to a region D2). From that point, the washing machine performs the bubble-removal cycle. After the bubbles are removed to a predetermined amount by the bubble-removal cycle, the bubbles contacting the electrodes 21 and 22 is also removed, so that the voltage formed between the two electrodes 21 and 22 is gradually raised (refer to a region D3). When the bubbles are completely removed and the voltage is recovered to the voltage that has been formed before the bubbles contact the electrode sensor 10, the washing machine resumes the state of before the bubble-removal cycle has been performed, and continues to perform the washing cycle (refer to a region D4).

Fig. 6 is a flowchart of a method of removing a bubble in a washing machine according to the present invention. Referring to Fig. 6, when the washing cycle starts (st 11), the bubbles are generated by collision between the laundry and the washing water. When the detergent is excessively inserted, the bubbles are accumulated more and more in the inside of the tub 6 and resultantly rise along the water pipe 19 (st 12). The bubbles rising along the water pipe 19 contain ion produced when the detergent is molted in the washing water and ion from the washing water itself and thus form electrolyte. Therefore, when such bubbles contact the electrodes 21 and 22, the electrode sensor is conducted and the voltage drastically drops because there is no resistance between the electrodes 21 and 22 (st 13).

When the voltage change is detected, the washing machine starts the bubble-removal cycle to remove the bubbles in the inside of the tub 6 (st 14). After the bubbles are removed by the bubble-removal cycle, the voltage applied between the electrodes 21 and 22 is recovered to the original voltage. After the voltage is recovered, the washing cycle that has been performed resumes (st 15).

As described above, when the bubbles, which is electrolyte, contact the electrode sensor 10 installed in the inside of the water pipe 19, the electrode sensor 10 is conducted. After the bubble generation is detected by conduction of the electrode sensor 10, the driver of the washing machine is controlled to allow the bubble-removal cycle of the washing machine to be performed. After the bubbles are removed, the voltage applied between the both ends of the electrode sensor 10 is recovered. When the voltage is recovered, it is recognized that the bubbles have been removed and the washing machine can resume the previous cycle it has performed.

Since the bubble-removal method is performed by an electronic-sensitive method that uses a property that electricity is conducted by ion contained much in the bubbles, operation reliability can be enhanced.

[Second embodiment]

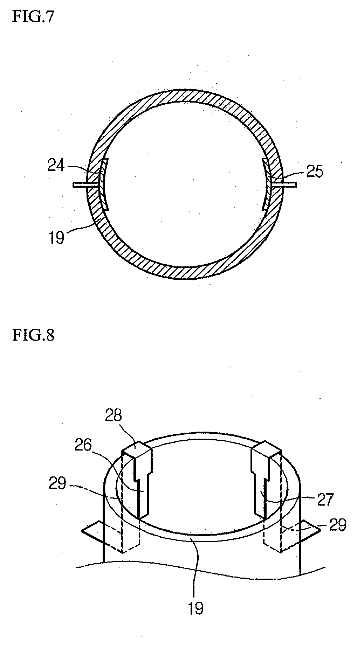

Fig. 7 is a view of the second embodiment according to the present invention. In the first embodiment, the electrodes 21 and 22 are a bar type and protruded in a predetermined length in the inside of the water pipe 19. However, the bar type electrodes can be stained with foreign substance, so that electricity may not be conducted between the stained electrodes. To prevent such a problem, the second embodiment adopts plate-shaped electrodes 24 and 25 having a plate whose contact area is wide, so that the electrodes may be formed over the wide inner wall of the water pipe 19.

It is easily expected that the operation reliability of the electrode sensor be improved even more according to the second embodiment. The parts not described in the second embodiment are the same as the first embodiment.

[Third embodiment]

Fig. 8 is a view of the third embodiment according to the present invention. The third embodiment will be described with reference to Fig. 8.

In the first and second embodiments, the wall of the water pipe 19 is punched and the electrode sensor is fit and fixed therein. However, such a manufacturing process requires additional process of punching the water pipe 19. Considering such a problem, it is possible to allow the electrode sensor 10 to be hooked at the upper end of the water pipe 19 integrally formed in the tub 6 using a hooking structure and allow the bellows 5 to cover thereon, so that the position of the electrode sensor 10 can be fixed.

A plurality of bending portions 28 and 29 are formed in parts extending from the plate-shaped electrodes 26 and 27 so that the electrode sensor 10 may be fixed in the water pipe 19. In detail, one bending surface forms a stand 28 hooked at the upper end of the water pipe 19 and the surface extending further forms a guide 29 in which the electrode 26 can be inserted.

Operation in which the electrode sensor 10 is installed in the water pipe 19 will be described below. First, the electrodes 26 and 27 are hooked in the inner surface of the water pipe 19 by a user. After that, the guide 29 is pulled at the outside of the water pipe 19 to pull the electrode. When the stand 28 is hooked at the upper end of the water pipe 19, the pulling operation is stopped. If the pulling operation is finished, force grasping the water pipe 19 is produced due to mutual pull force between the guide 29 and the electrode 26, so that the mutual positions of the electrode sensor 10 and the water pipe 19 can be fixed. Also, the bellows 5 is fixed thereon, so that the electrode sensor 10 can be firmly fixed.

Also, it may be possible to increase the reliability of detecting the bubbles by forming a bar-type electrode in the inside of the electrodes 26 and 27.

According to the third embodiment, the process of installing the electrode sensor 10 and the process of manufacturing the water pipe 19 can be performed in a simpler and more convenient manner. Since the parts not described in the third embodiment have been clearly described in the first and second embodiments, descriptions thereof will be omitted.

For other embodiment, in the case where the electrode sensor 10 is formed at an about upper portion in the inner periphery of the tub, the bubble generation can be reliably detected. However, in that case, since the water splashing in the inside of the tub may contact the electrode sensor, the reliability of the electrode sensor 10 may be deteriorated. Nevertheless, if a structure for preventing the washing water from contacting the electrode sensor under a general operating condition is provided, the sprint of the present invention can be properly realized even though the electrode sensor is directly installed in the inner periphery of the tub.

According to the present invention, it is possible to enhance the washing efficiency by detecting the bubble as soon as the bubble is generated during the washing cycle and immediately performing the bubble-removal cycle.

Also, since the present invention can be applied to the open type washing machine where the inner/outer sides of the tub are open, applicability of the bubble detection device can be increased.

Also, since the bubble generation can be detected by the electronic-sensitive method that uses the conductivity in the inside of the bubbles, the operational reliability of the bubble detection device can be improved.

It will be apparent to those skilled in the art that various modifications and variations can be made in the present invention. Thus, it is intended that the present invention covers the modifications and variations of this invention provided they come within the scope of the appended claims and their equivalents.

## Claims

1. A washing machine having an outcase, a tub disposed within the outcase, for storing washing water, and a drum for rotating in the tub and receiving a laundry, the washing machine comprising:
an electrode sensor having at least one part disposed in an inner side of the tub, for detecting a voltage change when a bubble contacts the sensor.

2. The washing machine according to claim 1, wherein the electrode sensor is disposed in a pipe for connecting an inside and an outside of the tub.

3. The washing machine according to claim 1, wherein the pipe is a water pipe.

4. The washing machine according to claim 2, wherein the pipe is a communication pipe.

5. The washing machine according to one of claims 2 through 4, wherein the electrode sensor is hooked at an edge of the pipe so that a position thereof is fixed.

6. The washing machine according to claim 5, wherein the electrode sensor comprises:
an electrode put in an inside of the tub;
a stand bent and extended from the electrode and which contacts an edge surface of the pipe; and
a guide bent from the stand and which extends in parallel with the electrode.

7. The washing machine according to any one of the preceding claims, wherein the electrode sensor comprises a pair of electrodes.

8. The washing machine according to any one of the preceding claims, wherein the electrode sensor comprises a bar-type electrode protruded into the tub.

9. The washing machine according to one of claims 1 through 8, wherein the electrode sensor comprises a plate-shaped electrode spread widely in an inner surface of the tub.

10. An apparatus of controlling a washing machine, comprising:
a driver for driving each part of the washing machine;
an electrode sensor for detecting a bubble generation using a voltage change between electrodes when a bubble generated during a washing cycle contacts the electrodes; and
a controller for controlling to perform a bubble-removal cycle of the washing machine by controlling the driver using a bubble detection signal from the electrode sensor.

11. A method of controlling a washing machine, comprising:
when conductive bubble generated during a washing cycle contacts an electrode sensor, judging that a bubble has been generated using a voltage change detected by the electrode sensor and performing a bubble-removal cycle.

12. The method according to claim 11, wherein the bubble-removal cycle performs a water supply cycle additionally.

13. The method according to claim 11, wherein the bubble-removal cycle is a suspense cycle of the washing machine.
